# EUROPEAN PATENT APPLICATION

(11) **EP 1 632 680 A1**
(43) Date of publication of application: **08.03.2006**
(21) Application number: 04388060.8
(22) Date of filing: 07.09.2004
(51) Int. Cl.: F16B 2/12

(54) **A method of joining two profiled pultruded panels together and an arresting fitting therefor**

(71) Applicant: FIBERLINE A/S, 6000 Kolding (DK)
(72) Inventor: Thorning, Henrik, 6000 Kolding (DK); Kristensen, Fritz Vinter, 5500 Middelfart (DK)
(74) Representative: Nielsen, Henrik Sten

(57) **Abstract**

Two panels (50;52) each have a base wall (54;56) and at least one profiled element (58;60) of a basic L-shaped configuration having a web and a head. The method comprises positioning the panels in co-planar relationship so as to position the webs face to face, and providing an arresting fitting (10) having two co-operating parts (12;14), each part having a top component (16;28) including guiding elements (34;36) for allowing the top components to slide relative to one another from an open position to an arresting position. Each of the parts (12;14) further has a flange (22;42) extending in an acute angle from the top component and being joined to the top component in a junction. The flanges (22;42) are orientated towards one another. A pair of elements (18;32) arrest the two parts (12;14) in the arresting position in which the outer free ends of the flanges define a first spacing slightly smaller than the total thickness of the two webs and the flanges define a second spacing at the junctions corresponding to or being slightly smaller than the total width of the two heads of the profiled elements. The method further comprises arranging the arresting fitting straddling the two profiled elements while in the open position, and sliding the top components of the two co-operating parts relative to one another for shifting the two parts from the open position to the arresting position.

## Description

The present invention relates to a method of joining two profiled pultruded panels together.

Within numerous technical fields, profiled pultruded panels have within the last decade been successfully used, e.g. in applications, such as ships, bridges, technical installations, such as installations in chemical factories, in which a high corrosive atmosphere may exist.

The obvious advantages of pultruded panels or generally pultruded profiled elements involve an extremely low weight as compared to strength and load bearing capability, a high resistance to corrosion and resistance to environmental conditions such as rain, snow etc. In spite of the increase in the market and also the numerous different advantageous applications of e.g. profiled pultruded panels, the technique of assembling two or more panels has up till now involved simple mechanical machining or cutting a hole in the panels and fastening the panels together by means of bolts and nuts, possibly also adhering the panels together, which process of machining or cutting a hole by means of a drill and mechanically assembling the panels together by means of a bolt and nut constitutes an extremely time consuming and consequently also a costly process.

In view of the above, there is a need for a swift and reliable technique for assembling or joining profiled pultruded elements together, which technique involves a minimum of labour and basically no skill for performing mechanical machining or similar operations, such as drilling, mounting bolts and knots and tightening the bolts and knots properly.

An object of the present invention is to fulfil the above needs.

A particular advantage of the present invention relates to the fact that the process of joining two profiled pultruded panels together may easily be accomplished by means of a mechanical fixation or arresting device without prior machining of the panels such as drilling holes etc.

A particular feature of the present invention relates to the face that through the omission of a step of drilling holes through the profiled pultruded panels, the panels are not weakened due to the presence of holes, which holes inevitably weakens the overall structure composed of the profiled pultruded panels.

The above object, the above advantage and the above feature together with numerous other objects, advantages and features which will be evident from the below detailed description of an advantageous embodiment of the present invention is according to a first aspect of the present invention obtained by a method of joining two profiled pultruded panels together, each of said panels having a base wall defining an outer edge and at least one profiled element of a basic L-shaped configuration having a web and a head, said web defining a height from said base wall to the outer surface of said head, and said head defining a width at said outer surface thereof, said at least one profiled element extending perpendicularly from said base wall at said outer edge thereof, said method comprising:
i) positioning said panels in co-planar relationship so as to position said webs of said profiled elements face to face,
ii) providing an arresting fitting having two co-operating parts, each part having a top component including guiding elements for allowing said top components of said two co-operating parts to slide relative to one another from an open position to an arresting position, each of said parts further having a flange extending in an acute angle from said top component and being joined to said to said top component in a junction, said flanges being orientated having their outer free ends pointing towards one another, said free ends of said flanges define a distance from said top components substantially corresponding to said height, said two co-operating parts further having a pair of arresting elements for arresting said two parts in said arresting position in which said outer free ends of said flanges define a first spacing slightly smaller than the total thickness of said two webs of said two profiled elements and in which said flanges define a second spacing at said junctions corresponding to or being slightly smaller than the total width of said two heads of said profiled elements,
iii) arranging said arresting fitting straddling, said two profiled elements while in said open position, and
iv) sliding said top components of said two co-operating parts relative to one another for shifting said two parts from said open position to said arresting position so as to arrest said two profiled elements together.

It is a particular feature of the novel technique or method of joining two profiled pultruded panels according to the first aspect of the present invention that the arresting fitting in its arresting position contacts and presses the L-shaped profiled elements of the two profiled pultruded panels together at the top of the head of the L-shaped profiled elements and also at the bottom of the L-shaped profiled elements, i.e. at the junction to the planar base wall of the profiled pultruded panels. The mechanical fixation is consequently, due to the two point arresting characteristic of the method according to the first aspect of the present invention, highly stable and may also provide a long-lasting mechanical fixation.

For improving the ability of providing a long lasting fixation between the two profiled pultruded panels in accordance with the method according to the first aspect of the present invention, the method further preferably comprises the initial step prior to step i) of applying an adhesive to said webs of said profiled elements. In accordance with the teachings of the present invention, the two profiled pultruded panels to be joined together in accordance with the method according to the first aspect of the present invention may be of identical configuration or alternatively be of different configuration, as the one profiled element preferably has one or more longitudinaly extending recesses and the other profiled element has congruently shaped and longitudinally extending ridges for being received in said recesses. In this context, it is to be understood that the expression a basic L-shaped configuration does not limit the configuration of the profiled elements of the two profiled pultruded elements to specific and only L-shaped configurations as the one profiled element may have a general I-shaped configuration or otherwise configurated shape originating from a modified L-shaped configuration by the addition of ridges and/or recesses.

The webs of the basic L-shaped profiled elements of the two profiled pultruded panels to be joined together in accordance with the method according to the first aspect of the present invention may have identical planar faces of contact, however, according to a specific aspect of the present invention, the fixation between the two profiled pultruded panels may be further improved by providing the profiled elements having congruently shaped contact faces of a zig zag and/or convex/concave configuration or configurations. Consequently, the congruently shaped faces of contact may provide an integral locking between the two faces of contact between the two basic L-shaped profiled elements of the two profiled pultruded panels.

As discussed above, the arresting fitting provides a pressure for contacting the two face to face positioned webs of the two profiled elements at the head of the L-shaped profiled elements and at the junction between the L-shaped profiled elements to the planar base walls and according to a further improvement of the technique according to the present invention, the mechanical flexible or elastic pressure generated at the junction from the L-shaped profile element to the basically planar base walls may be further enhanced, as the arresting fitting may have inwardly bent outer flanges, the bents defined by the outer flanges defining an obtuse angle relative to the major parts of the two flanges.

In accordance with specific embodiments of the method according to the first aspect of the present invention, the obtuse angle defined by the outer flanges relative to the major parts of the two flanges as discussed above may preferably be of the order of 135°-175°, such as 150°-170°, e.g. 145°-150°, 150°-155°, 155°-160°, 160°-170°, 170°-175°, 175°-180°, 180°-185°. Similarly, the acute angle defined between the top component of the two parts of the arresting fitting and the flanges of the two parts of the arresting fittings may preferably be larger than 45° such as 45°-85°, e.g. 60°-80°, preferably 45°-50°, 50°-55°, 55°-60°, 60°-65°, 65°-70°, 70°-75°, 75°-80°, 80°-85°.

The above object, the above advantage and the above feature together with numerous other objects, advantages and features which will be evident from the below detailed description of an advantageous embodiment of the present invention is according to a second aspect of the present invention obtained by an arresting fitting for use in joining two profiled pultruded panels together, each of said panels having a base wall defining an outer edge and at least one profiled element of a basic L-shaped configuration having a web and a head, said web defining a height from said base wall to the outer surface of said head, and said head defining a width at said outer surface thereof, said at least one profile element extending perpendicularly from said base wall at said outer edge thereof, said arresting fitting having two co-operating parts, each part having a top component including guiding elements for allowing said top components of said two co-operating parts to slide relative to one another from an open position to an arresting position, each of said parts further having a flange extending in an acute angle from said top component and being joined to said to said top component in a junction, said flanges being orientated having their outer free ends pointing towards one another, said free ends of said flanges define a distance from said top components substantially corresponding to said height, said two co-operating parts further having a pair of arresting elements for arresting said two parts in said arresting position in which said outer free ends of said flanges define a first spacing slightly smaller than the total thickness of said two webs of said two profiled elements and in which said flanges define a second spacing at said junctions corresponding to or being slightly smaller than the total width of said two heads of said profiled elements.

The arresting fitting may, in accordance with specific embodiments of the arresting fitting according to the second aspect of the present invention, be implemented in accordance with the features described above with reference to the method according to the first aspect of the present invention.

In accordance with the presently preferred embodiment of the arresting fitting according to the second aspect of the present invention, the fitting is made from galvanised steel or otherwise corrosion resistant metal or fibre reinforced plastics.

The top component of each of the two parts of the arresting fitting may be constituted by co-operating grids, pins, bushes etc allowing the arresting fitting to exhibit an adequate stiffness and at the same time, allow the two parts to be shifted together in the sliding of the two parts from the open position to the arresting position. However, according to the presently preferred embodiment of the arresting fitting according to the second aspect of the present invention, the top component is constituted by a plate element constituting a continuation of the flange.

In accordance with the above described presently preferred embodiment of the arresting fitting according to the second aspect of the present invention, the guiding elements are preferably constituted by inwardly bent wing elements of said plate element of one of said two parts serving to receive and allow the sliding of the plate element of the other part of said arresting fitting.

The arresting elements serving to arrest the two part arresting fitting in the arresting position, in which the two L-shaped profiled elements of the profiled pultruded panels are mechanically arrested and locked together, may be constituted by any commonly known arresting elements such as dovetail arresting elements, spring arresting elements etc. Accordingly to the presently preferred embodiment of the arresting fitting according to the second aspect of the present invention, the arresting elements are preferably constituted by a punched hole of one of said two plate elements constituting said top components and a flange of the other plate element of the other top component.

The present invention is now to be further described with reference to the drawings, in which:
Fig. 1 is a perspective and schematic view of a two-part fitting to be used for the permanent assembling of two profiled pultruded panels, the two parts being separated from one another,
Fig. 2 is a view similar to the view of Fig. 1 illustrating the two parts of the fitting in a partly assembled state,
Fig. 3 is a view similar to the views of Fig. 1 and 2 illustrating the two parts of the fitting in an assembled and permanently arrested state,
Fig. 4a is a partly cut-away, perspective and schematic view illustrating two pultruded profiled panels to be joined together and assembled by means of the two part fitting shown in Figs. 1-3,
Fig. 4b is a view similar to the view of Fig. 4a illustrating the process of mounting the two part fitting shown in Figs. 1-3 for joining the two panels shown in Fig. 4a together,
Fig. 4c is a view similar to the view of Figs. 4a and 4b illustrating the two panels joined together and permanently arrested by means of the fitting also shown in Figs. 1-3, and
Fig. 4d is a vertical sectional view illustrating in greater details the permanent arresting ability of the two part fitting also shown in Figs. 1-3 by joining the two profiled and pultruded panels together, which panels are also shown in Figs. 4a-4c.

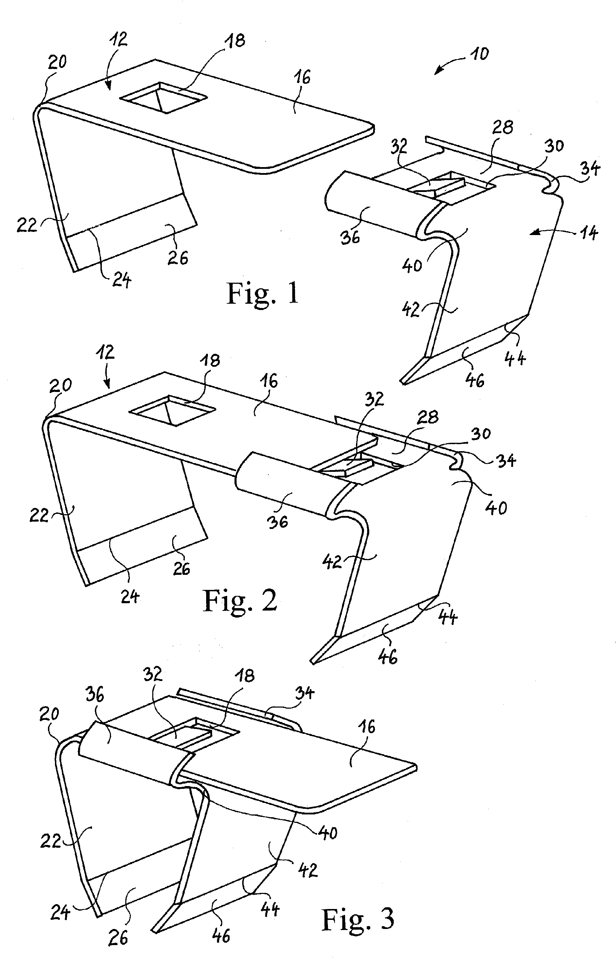

In Figs. 1-3, perspective and schematic views are presented illustrating a first and presently preferred embodiment of a fitting according to the present invention for use in a method of assembling and permanently arresting profiled and pultruded panels. The fitting is designated the reference numeral 10 in its entirety and comprises two parts: a male part 12 and a female part 14. Both parts 12 and 14 are preferably made from galvanised steel or otherwise corrosion resistant metal or alternatively fibre reinforced plastics.

The two parts 12 and 14 have, according to the present invention to exhibit a high strength and at the same time provide flexibility or elasticity for allowing the two parts to flex and in doing so create an elastic pressure, as will be described in greater details below. The top part 12 comprises a top plate 16 of a length somewhat exceeding the width of the two profiled elements to be assembled and having a punched hole 18, which hole is of rectangular or square configuration. The outer ends of the top plate 16 are chamfered for allowing the top plate to be easily assembled with the co-operating female part 14. The top plate 16 is through a bend 20 integrally joined with a side plate 22, which is through a further bend 24 integrally joined to a bottom plate 26. The bend 20 defines an acute angle between the top plate 16 and the side plate 22, such as an angle of the order of 70° an the bend 24 defines an obtuse angle between the side plate 22 and the bottom plate 26, such as an angle of the order of 160°.

The female part 14 comprises a planar top plate 28 having a length corresponding to the width of the profiles of the profiled and pultruded panels which are to be joined together and arrested by means of the two part fitting 10. The top wall 28 is provided with a punched and n-shaped aperture 20, in which a flange 32 is bent upwardly from the plane of the top plate 28. The flange 32 constitutes a locking or arresting flange intended to co-operate with the hole 18 of the top plate 16 of the male part 12. The female part 14 is further provided with two flanges or wing components 34 constituting elongations of the top plate 28 and bent upwardly and inwardly relative to the top plate 28 for providing two side guides in which the side edges of the top plate 16 is guided for allowing the bottom side of the top plate 16 of the male part 12 to slide in facial contact with the upper side of the top plate 28 of the female part 14.

Like the male part 12, the female part 14 is provided with a bend 40 corresponding to the bend 20 of the male part, a side plate 42 corresponding to the side plate 22 of the male part 12, a bend 44 corresponding to the bend 24 of the male part 12 and further, a bottom plate 46 corresponding to the bottom plate 26 of the male part 12. The bends 20 and 40 and further the bends 24 and 44 are preferably identical and the side plates 22 and 42 and further the bottom plates 26 and 46 are also preferably identical for providing a basically symmetrical fitting although an asymmetrical configuration is also contemplated and may, for specific applications be advantageous.

In Fig. 2, the two-part fitting 10 is shown in a partly assembled state as the top plate 16 of the male part 12 is partly received between the two guiding wings 34 and 36 and illustrated in a state in which the front edge of the top plate 16 is about to slide on top of the arresting flange 32. Until the position shown in Fig. 2 is reached, the locking between the two parts 12 and 14 of the fitting 10 is fairly free, whereas after the front edge of the top plate 16 of the male part 12 is moved further on, the arresting flange 32 of the top plate 28 of the female part 14 is pressed downwardly, and the locking becomes tight and frictional.

In Fig. 3, the final arresting position of the fitting 10 is shown in which the top plate 16 of the male part 12 is moved into its final position relative to the female part 14, in which final position the arresting flange 32 is bent into the punched hole 18 of the top plate 16 of the male part 12 for providing a permanent locking and arresting between the two parts 12 and 14. In this position, the arresting flange 32 further presses against the inner part of the top plate 16 for providing a tight coupling between the two parts 12 and 14.

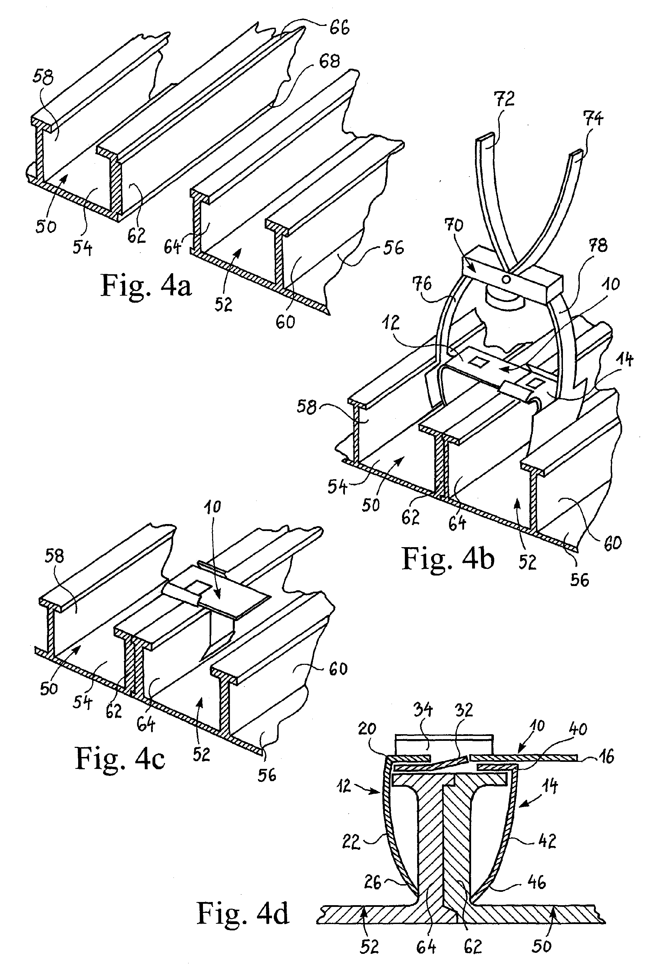

In Figs. 4a-4c, the intentional application of the fitting 10 described above with reference to Figs. 1 and 3 is shown. In Fig. 4a, two profiled and pultruded panels are shown. The two panels, one of which is designated the reference numeral 50 and the other being designated the reference numeral 52 are preferably of identical configuration and constitute sections of identical sections of profiled pultruded elements. Alternatively, the two panels 50 and 52 may be of different configuration or shape, as a one panel may constitute a section of a wall or other structural element to which a single panel or a number of panels joining together and arrested in accordance with the teachings of the present invention is or are to be fixated. The panels 50 and 52 each have a bottom wall 5 and 56, respectively, from which upwardly protruding, T-shaped profiled elements 58, 60 extend, which are integrally joined to the bottom walls 54 and 56, since the panels 50 and 52 are manufactured in a pultrusion process. The panel 50 further includes an end L-shaped profiled element 52, which is intended to co-operate with a mating L-shaped profiled element 54 of the panel 62. The outer end wall of the L-shaped element 62 is provided with a top and bottom recess 66 and 68, respectively, allowing the outwardly facing end wall of the profiled element 62 to be received within the L-shaped profiled element 64 of the panel 52. The face to face joining of the two panels 50 and 52 may involve simple mechanical joining of the L-shaped profiled element 62 with the L-profiled element 64 of the panel 50 and the panel 52, respectively, alternatively and preferably, an adhesive is preferably applied to one or both of the two profiled elements 62 and 64, which are to be joined together. It is, however, to be understood, that the technique of joining and arresting the two panels 50 and 52 together as is illustrated in Figs. 4b and 4c by means of a number of the fittings 10 described above with reference to Figs. 1-3 may not involve adhering the two panels together, as the mechanical arresting or fixation of the two panels together by means of the fittings 10 may provide a long term and lasting fixation.

In Fig. 4b, the two part fitting 10 is to be mounted straddling the two profiled elements 62 and 64 of the two panels 50 and 52 and in doing so, joining the two panels together. The two parts 12 and 14 of the fitting 10 are forced together by means of a tool 70 constituting a pair of tongs having tow handles 72 and 74 co-operating with two jaws 76 and 78, respectively, which jaws 76 and 78 serve to press the two parts and 14 of the fitting 10 together as is illustrated in Figs. 2 and 3 and discussed above with reference to Figs 2 and 3. In Fig. 4c, the permanent fixation and arresting of the two panels by means of the fitting 10 is shown. It is to be understood that the permanent fixation and arresting of the two panels is accomplished by means of a number of fittings 10, which are mounted spaced apart a distance of e.g. 10-50 cm, such as 20-30 cm.

In Fig. 4d, a vertical sectional view is shown illustrating the joining and arresting of the two panels 50 and 52 by means of the fitting 10. As is illustrated in Fig. 4d, the width between the two bends 20 and 40 of the male part 12 and the female part 14, respectively, corresponds to the width between the two joined L-shaped profiled elements 62 and 64 of the two panels 50 and 52, respectively, as the side plates 22 and 42 of the male and female parts 12 and 14, respectively, press against the outer ends of the two profiled elements 64 and 62, respectively. The joining and arresting of the two panels 50 and 52 by means of the fitting 10 is further improved by the elastic bending or deformation of the two side plates 22 and 42 of the male and female parts 12 and 14, respectively, since the width between the two outer ends of the bottom walls 26 and 46 of the two parts 12 and 14, respectively, are in the non-biased state of the fitting 10 somewhat smaller than the overall width of the two profiled elements 62 and 64, thereby providing a pressure against the bottom ends of the two profiled elements 62 and 64 at the junction to the horizontal walls 56 and 54, respectively. Consequently the fitting 10 is designed to a specific set of co-operating profiled elements of the panels which are to be joined together as the height of the fitting corresponds to the height of the profiled elements, which are to be joined together and at the same time, the inner width defined between the opposite side plates 22 and 42 of the two parts 12 and 14, respectively, is identical to or slightly smaller than the outer width of the L-shaped profiled elements, which are to be joined together for pressing the upper free ends of the profiled elements together and at the same time, the width between the free ends of the opposite bottom walls 26 and 46 of the two parts 12 and 14, respectively, is somewhat smaller than the overall width of the webs of the two profiled elements, which are to be joined together. Although the joining of the two panels 50 and 52 has been illustrated by the co-operation between the L-shaped end profiled element of the panels, it is to be understood that differently configurated profiled end elements may be used, such as two opposite L-shaped end profiles, having congruent zig zag corrugations or congruent convex and concave configurations. Furthermore, it is contemplated that the technique of joining profiled panels together may be used in connection with different materials such as extruded polymer or plastic profiles, e.g. fibre reinforced extruded polymer or plastic profiles or co-extruded polymer or plastic profiles or aluminium profiled panels.

Although the present invention has above been described with reference to a specific and presently preferred embodiment of the fitting and with reference to a specific technique of joining two panels together, it is obvious to a person having ordinary skill in the art that numerous alternative embodiments may be contemplated within the scope of the invention as defined in the appending patent claims and all such modifications and obvious alternatives are to be construed part of the present invention.

## Claims

1. A method of joining two profiled pultruded panels together, each of said panels having a base wall defining an outer edge and at least one profiled element of a basic L-shaped configuration having a web and a head, said web defining a height from said base wall to the outer surface of said head, and said head defining a width at said outer surface thereof, said at least one profiled element extending perpendicularly from said base wall at said outer edge thereof, said method comprising:
i) positioning said panels in co-planar relationship so as to position said webs of said profiled elements face to face,
ii) providing an arresting fitting having two co-operating parts, each part having a top component including guiding elements for allowing said top components of said two co-operating parts to slide relative to one another from an open position to an arresting position, each of said parts further having a flange extending in an acute angle from said top component and being joined to said to said top component in a junction, said flanges being orientated having their outer free ends pointing towards one another, said free ends of said flanges define a distance from said top components substantially corresponding to said height, said two co-operating parts further having a pair of arresting elements for arresting said two parts in said arresting position in which said outer free ends of said flanges define a first spacing slightly smaller than the total thickness of said two webs of said two profiled elements and in which said flanges define a second spacing at said junctions corresponding to or being slightly smaller than the total width of said two heads of said profiled elements,
iii) arranging said arresting fitting straddling, said two profiled elements while in said open position, and
iv) sliding said top components of said two co-operating parts relative to one another for shifting said two parts from said open position to said arresting position so as to arrest said two profiled elements together.

2. The method according to claim 1, said method further comprising the initial step prior to step i) of applying an adhesive to said webs of said profiled elements.

3. The method according to any of the claims 1 or 2, said profiled elements of said two profiled pultruded panels being of identical configuration or alternatively and preferably being of different configuration, the one profiled element having one or more longitudinally extending recesses and the other profiled element having congruently shaped and longitudinally extending ridges for being received in said recesses.

4. The method according to any of the claims 1-3, said webs of said profiled elements having planar faces of contact or alternatively having congruently shaped contact faces of a zig-zag or convex/concave configuration or configurations.

5. The methods according to any of the claims 1-4, said flanges of said two co-operating parts of said arresting fitting further having inwardly bent outer flanges, said bends defined by said outer flanges defining an obtuse angle relative to the major parts of said two flanges.

6. The method according to claim 5, said obtuse angle being of the order of 135°-175°, such as 150°-170°, e.g. 145°-150°, 150°-155°, 155°-160°, 160°-170°, 170°-175°, 175°-180°, 180°-185°.

7. The method according to any of the claims 1-6, said acute angle being larger than 45°, such as 45°-85°, e.g. 60°-80°, preferably 45°-50°, 50°-55°, 55°-60°, 60°-65°, 65°-70°, 70°-75°, 75°-80°, 80°-85°.

8. An arresting fitting for use in joining two profiled pultruded panels together, each of said panels having a base wall defining an outer edge and at least one profiled element of a basic L-shaped configuration having a web and a head, said web defining a height from said base wall to the outer surface of said head, and said head defining a width at said outer surface thereof, said at least one profile element extending perpendicularly from said base wall at said outer edge thereof, said arresting fitting having two co-operating parts, each part having a top component including guiding elements for allowing said top components of said two co-operating parts to slide relative to one another from an open position to an arresting position, each of said parts further having a flange extending in an acute angle from said top component and being joined to said to said top component in a junction, said flanges being orientated having their outer free ends pointing towards one another, said free ends of said flanges define a distance from said top components substantially corresponding to said height, said two co-operating parts further having a pair of arresting elements for arresting said two parts in said arresting position in which said outer free ends of said flanges define a first spacing slightly smaller than the total thickness of said two webs of said two profiled elements and in which said flanges define a second spacing at said junctions corresponding to or being slightly smaller than the total width of said two heads of said profiled elements.

9. The arresting fitting according to claim 8, said fitting being made from galvanised steel or otherwise corrosion resistant metal or fibre reinforced plastics.

10. The arresting fitting according to any of the claims 8 or 9, said top component being constituted by a plate element constituting a continuation of said flange.

11. The arresting fitting according to claim 10, said guiding elements being constituted by inwardly bent wing elements of said plate element of one of said two parts serving to receive and allow the sliding of the plate element of the other part of said arresting fitting.

12. The arresting fitting according to any of the claims 8-11, said arresting elements being constituted by a punched hole of one of said two plate elements constituting said top components and a flange of the other plate element of the other top component.

13. The arresting fitting according to any of the claims 8-12, said flanges of said two co-operating parts of said arresting fitting further having inwardly bent outer flanges, said bends defined by said outer flanges defining an obtuse angle relative to the major parts of said two flanges.

14. The arresting fitting according to claim 12, said obtuse angle being of the order of 135°-175°, such as 150°-170°, e.g. 145°-150°, 150°-155°, 155°-160°, 160°-170°, 170°-175°, 175°-180°, 180°-185°.

15. The method according to any of the claims 8-13, said acute angle being larger than 45°, such as 45°-85°, e.g. 60°-80°, preferably 45°-50°, 50°-55°, 55°-60°, 60°-65°, 65°-70°, 70°-75°, 75°-80°, 80°-85°.
